**Europäisches Patentamt**

**European Patent Office**

**Office européen des brevets**

(19)

(11) **EP 1 067 715 A1**

(12) **DEMANDE DE BREVET EUROPEEN**

(43) Date de publication:
**10.01.2001 Bulletin 2001/02**

(51) Int Cl.7: **H04B 10/135**, H04B 10/18

(21) Numéro de dépôt: **00401698.6**

(22) Date de dépôt: **15.06.2000**

| | |
|---|---|
| (84) Etats contractants désignés:<br>**AT BE CH CY DE DK ES FI FR GB GR IE IT LI LU MC NL PT SE**<br>Etats d'extension désignés:<br>**AL LT LV MK RO SI**<br><br>(30) Priorité: **08.07.1999 FR 9908846**<br><br>(71) Demandeur: **ALCATEL**<br>**75008 Paris (FR)**<br><br>(72) Inventeurs:<br>• **Penninckx, Denis**<br>**91620 Nozay (FR)** | • **Lanne, Stéphanie**<br>**75014 Paris (FR)**<br>• **Hamaide, Jean-Pierre**<br>**91180 St Germain les Arpajon (FR)**<br><br>(74) Mandataire: **Lamoureux, Bernard et al**<br>**COMPAGNIE FINANCIERE ALCATEL**<br>**Dépt. Propriété industrielle**<br>**30, avenue Kléber**<br>**75116 Paris (FR)** |

(54) **Dispositif de compensation de la dispersion de polarisation dans un système de transmission optique**

(57)   Afin d'augmenter le débit et la longueur de transmission de données par fibre optique, le dispositif compense la dispersion de polarisation de la liaison au moyen d'un contrôleur de polarisation (PC), de moyens (DDG) pour engendrer un retard différentiel entre deux modes de polarisation orthogonaux et de moyens d'asservissement (CU) du contrôleur de polarisation (PC).

Il comporte en outre des moyens de compensation de dispersion chromatique (DCM) intercalés dans la liaison et qui appliquent une compensation ajustée dynamiquement par les moyens d'asservissement de façon à optimiser la qualité du signal optique reçu (Srλ).

Application aux transmissions optiques à longue distance par fibres standard.

FIG_2

EP 1 067 715 A1

**Description**

L'invention se situe dans le domaine des transmissions de signaux par des moyens optiques et plus particulièrement des transmissions à haut débit sur des liaisons à longue distance utilisant des fibres optiques.

L'invention concerne un dispositif pour compenser, au moins partiellement, et dynamiquement, la dispersion de polarisation que l'on observe dans les systèmes de transmission à fibre optique.

Un système de transmission à fibre optique comporte typiquement :

- un terminal émetteur utilisant au moins une onde porteuse optique dont il module la puissance et/ou la fréquence optique en fonction de l'information à transmettre,
- une liaison de transmission optique constituée d'au moins une section de fibre monomode acheminant le signal émis par le terminal émetteur,
- et un terminal récepteur recevant le signal optique transmis par la fibre.

La performance d'un système de transmission optique, notamment en termes de qualité de signal et de débit, est limitée notamment par les propriétés optiques de la liaison qui est le siège des phénomènes physiques ayant pour effet de dégrader les signaux optiques. Parmi tous les phénomènes identifiés, l'atténuation de la puissance optique et la dispersion chromatique sont ceux qui sont apparus en premier comme les plus contraignants et pour lesquels on a proposé des moyens pour remédier au moins partiellement aux dégradations qu'ils entraînent.

L'atténuation dans les fibres d'un type donné dépend de la longueur d'onde de la porteuse du signal. Ainsi, les fibres monomodes installées au cours des dix dernières années, appelées "fibres standard", présentent une atténuation minimum pour une longueur d'onde autour de 1,5 $\mu$m, ce qui montre l'intérêt de choisir cette valeur pour les porteuses.

En outre, pour augmenter davantage les distances de transmission, l'atténuation a pu être compensée au moyen d'amplificateurs optiques disposés en amont ou en aval ou tout au long de la liaison.

De même, la dispersion chromatique dépend de la longueur d'onde. Pour les fibres standard, la dispersion chromatique est nulle à 1,3 $\mu$m et vaut environ 1,7 ps/(km.nm) à 1,5 $\mu$m. La faible atténuation à 1,5 $\mu$m a conduit à développer de nouvelles fibres, appelées "fibres à dispersion décalée", pour lesquelles la dispersion chromatique est nulle à cette longueur d'onde.

Toutefois, pour améliorer les performances des fibres standard déjà installées, on a aussi cherché à corriger les effets de la dispersion chromatique de ces fibres à 1,5 $\mu$m.

Une solution consiste à insérer dans la liaison au moins une fibre dispersive de compensation, appelée "fibre de compensation de dispersion" ou DCF (de l'anglais "Dispersion Compensating Fiber"). Ainsi, pour compenser exactement la dispersion chromatique, il suffit que la fibre dispersive ait une longueur et des caractéristiques de dispersion telles que la dispersion cumulée le long de cette fibre de compensation soit égale et opposée à celle créée le long de la fibre de la liaison de transmission.

On peut définir pour l'ensemble de la liaison, y compris la ou les fibre(s) de compensation, une valeur de dispersion cumulée résiduelle DR qui est la somme algébrique des dispersions cumulées DL et DC de la ou des fibre(s) dispersive(s) et de la fibre de la liaison de transmission. Elle peut s'exprimer mathématiquement par la formule :

$$(1) \qquad DR = DC + DL = \int D_1(z_1).dz_1 + \int D_2(z_2).dz_2$$

où $z_1$ et $z_2$ sont les abscisses de points placés respectivement le long de la fibre dispersive et le long de la liaison associée, $D_1$ et $D_2$ sont les paramètres de dispersion chromatique respectivement aux abscisses $z_1$ et $z_2$ de la fibre dispersive et de la fibre de la liaison de transmission, les intégrales qui expriment les dispersions cumulées DC et DL étant calculées respectivement le long de la fibre dispersive et le long de la fibre de la liaison de transmission associée, en prenant comme sens positif le sens de propagation des ondes.

Nous rappelons que le paramètre de dispersion D est lié à la constante de propagation $\beta$ par la relation :

$$d^2\beta/d\omega^2 = -(2\pi c/\omega^2)D ,$$

où $\omega$ est la pulsation de l'onde et c la vitesse de la lumière dans le vide.

La condition de compensation exacte de la dispersion chromatique est donc DR = DC + DL = 0.

En réalité, une compensation exacte de la dispersion chromatique n'est pas toujours optimales car la qualité du signal compensé reçu dépend aussi d'autres paramètres de la transmission et en particulier du type de modulation du signal transmis. C'est le cas en particulier si le signal émis présente un "chirp", c'est-à-dire une modulation de fréquence optique accompagnant toute modulation d'amplitude.

En fait, une telle compensation ne s'impose qu'en cas de besoin, c'est-à-dire pour des conditions de transmission (type de fibre, type de modulation, distance de transmission et débits) qui, sans compensation, entraîneraient des taux d'erreur dépassant une valeur limite acceptable commercialement, typiquement de 10$^{-15}$. De plus, pour des raison de coût minimum de la fibre de compensation de dispersion, on choisit normalement une valeur de compensation minimum compatible avec le taux d'erreur requis. Ainsi, pour des liaisons suffisamment courtes, on ne cherchera même pas à compenser la dispersion chromatique.

Jusqu'à présent, les compensations évoquées ci-dessus étaient traitées de façon indépendante et faisaient abstraction d'un autre phénomène défavorable appelé "dispersion modale de polarisation". En effet, dans les conditions d'exploitation actuelles des transmissions optiques, ce phénomène a longtemps été considéré comme négligeable par rapport à la dispersion chromatique. Il ne l'est plus dès que l'on cherche à augmenter toujours davantage les longueurs des liaisons et surtout le débit.

Même en l'absence de dispersion chromatique au sens usuel et bien que l'onde porteuse fournie par une diode laser au niveau de l'émetteur soit totalement polarisée, les fibres sont le siège d'une dispersion de polarisation qui a par exemple pour effet qu'une impulsion émise par le terminal émetteur est reçue déformée après sa propagation dans une fibre et présente une durée supérieure à sa durée originale.

Cette déformation est due à la biréfringence des fibres qui a pour effet que le signal optique se dépolarise pendant la transmission. En première approximation, le signal reçu à l'extrémité de la fibre de liaison peut être considéré comme constitué de deux composantes orthogonales, l'une correspondant à un état de polarisation pour lequel la vitesse de propagation est maximale (état principal de polarisation le plus rapide) et l'autre correspondant à un état de polarisation pour lequel la vitesse de propagation est minimale (état principal de polarisation le plus lent). Autrement dit, un signal impulsionnel reçu à l'extrémité de la fibre de liaison peut être considéré comme étant composé d'un premier signal impulsionnel, polarisé suivant un état de polarisation privilégié et arrivant en premier, et d'un second signal impulsionnel se propageant suivant un état de propagation retardé et arrivant avec un retard appelé "retard de groupe différentiel" ou DGD (de l'anglais "Differential Group Delay") qui dépend notamment de la longueur de la fibre de liaison. Ces deux états principaux de polarisation ou PSP (de l'anglais "Principal States of Polarisation") caractérisent donc la liaison.

Par conséquent, si le terminal émetteur émet un signal optique constitué d'une impulsion très brève, le signal optique reçu par le terminal récepteur est constitué de deux impulsions successives polarisées orthogonalement et ayant un décalage temporel égal au DGD. Comme la détection par le terminal consiste à fournir sous forme électrique une mesure de la puissance optique totale reçue, l'impulsion détectée aura une largeur temporelle augmentée en fonction de la valeur du DGD.

Ce retard peut être de l'ordre de 50 picosecondes pour une fibre standard de 100 kilomètres de longueur. La déformation des impulsions reçues par le terminal récepteur peut causer des erreurs de décodage des données transmises, par conséquent la dispersion de polarisation constitue un facteur limitant les performances des liaisons optiques, aussi bien analogiques que numériques.

Actuellement, on sait fabriquer des fibres monomodes à faible dispersion de polarisation (environ 0,05 ps/√km). Cependant, le problème subsiste pour les "fibres standard" installées et qui présentent des dispersions de polarisation très élevées constituant un obstacle technique majeur pour l'augmentation des débits transmis. D'autre part, ce problème réapparaîtra aussi pour les fibres à faible dispersion de polarisation lorsqu'on voudra encore augmenter le débit.

Par ailleurs, on sait réaliser des fibres à forte dispersion de polarisation, appelées aussi fibres à maintien de polarisation ou PMF (de l'anglais "Polarisation Maintaining Fiber"), qui permettent, en utilisant des tronçons de faible longueur, de procurer un retard différentiel fixe avec des états principaux de polarisation invariables. En disposant judicieusement un tel composant (ou tout dispositif générateur de retard différentiel entre deux modes de polarisation orthogonaux) en série avec une liaison de transmission présentant une dispersion de polarisation, on peut réaliser une compensation optique de la dispersion de polarisation. Ceci peut être réalisé soit en utilisant une fibre à maintien de polarisation de même retard différentiel que la liaison, mais en échangeant les états principaux de polarisation lent et rapide, soit en faisant coïncider un état principal de polarisation de l'ensemble constitué par la liaison et la fibre à maintien de polarisation avec l'état de polarisation de la source à l'émission. Pour ce faire, on utilise un contrôleur de polarisation que l'on place entre la liaison et la fibre à maintien de polarisation.

Un aspect important du phénomène de dispersion modale de polarisation est que la valeur du retard différentiel DGD et les états principaux de polarisation d'une liaison varient dans le temps en fonction de nombreux facteurs, tels que les vibrations et la température. Ainsi, contrairement à la dispersion chromatique, la dispersion de polarisation doit être considérée comme un phénomène aléatoire. En particulier, on caractérisera la dispersion de polarisation d'une liaison par une valeur dite "PMD" (de l'anglais "Polarisation Mode Dispersion Delay") définie comme la valeur moyenne de DGD mesuré.

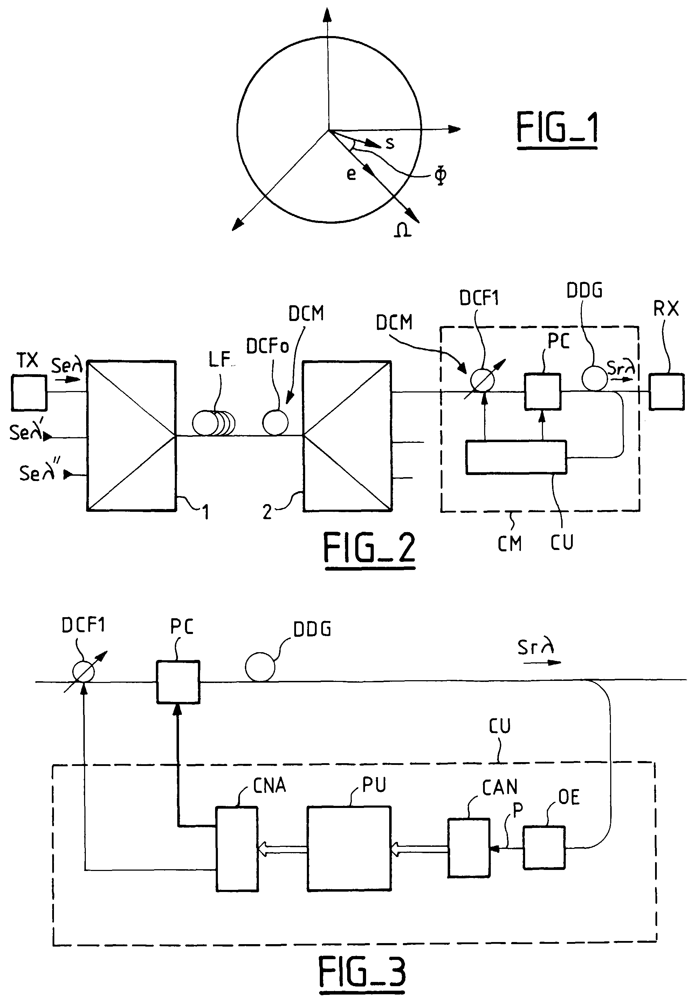

Plus précisément, on montre que la dispersion de polarisation peut être représentée par un vecteur de rotation aléatoire $\Omega$ dans l'espace de Poincaré où l'on représente habituellement les états de polarisation par un vecteur d'état de polarisation **S**, dit vecteur de Stokes, dont l'extrémité est située sur une sphère. La figure 1 montre le principaux vecteurs impliqués : le vecteur d'état de polarisation **S**, le vecteur de dispersion de polarisation $\Omega$ et le vecteur des états principaux de polarisation **e**, $\Phi$ étant l'angle entre **S** et $\Omega$.

Les vecteurs **e** et $\Omega$ ont la même direction et on a la relation : $\partial\mathbf{S}/\partial\omega = \Omega\otimes\mathbf{S}$, où $\omega$ est la pulsation de l'onde optique, le symbole $\otimes$ désignant le produit vectoriel.

Le module de Ω est la valeur de la différence de temps de groupe, c'est-à-dire du retard de propagation entre deux ondes polarisées selon les deux états principaux de polarisation de la liaison.

Une autre conséquence de ce caractère aléatoire est qu'un dispositif de compensation doit être adaptatif et le retard différentiel de la fibre à maintien de polarisation choisi de façon à être au moins égal aux valeurs de retard différentiel que l'on veut compenser. Un tel dispositif de compensation est décrit dans la demande de brevet européen EP-A-853 395 déposée le 30 décembre 1997 et publiée le 15 juillet 1998.

Un problème qui est apparu lors d'études sur la compensation de la PMD est celui des influences combinées de la dispersion de polarisation et de la dispersion chromatique. On s'est aperçu qu'en réalité l'efficacité de la compensation de la PMD était très sensible à la valeur de dispersion chromatique résiduelle Dr de la liaison dans son ensemble et donc à l'existence et à la valeur choisie de compensation de dispersion chromatique.

En particulier, on a observé la nécessité d'introduire une compensation précise de dispersion chromatique même pour des liaisons pour lesquelles une telle compensation n'aurait pas été nécessaire en l'absence de PMD.

On s'est également aperçu que la valeur optimale de compensation de dispersion chromatique à appliquer en présence de PMD ne correspond pas toujours à la valeur optimale de compensation qu'on appliquerait en l'absence de PMD, par exemple dans le cas où le signal émis présente un "chirp".

Ce phénomène peut s'expliquer par le fait que la méthode utilisée pour compenser la PMD réalise une compensation du premier ordre par rapport à la pulsation optique $\omega$. En réalité, le vecteur de dispersion de polarisation $\Omega$ ainsi que les états principaux de polarisation dépendent de la pulsation $\omega$ et cette dépendance devient prépondérante lorsque la compensation du premier ordre est effectuée. Ces effets du second ordre par rapport à $\omega$ peuvent être en partie assimilés à une dispersion chromatique supplémentaire induite par la PMD. Comme la PMD présente un caractère aléatoire, cette dispersion chromatique induite aura elle-même ce caractère aléatoire.

Aussi, l'invention a pour but d'améliorer l'efficacité de la compensation de la dispersion de polarisation en tenant compte des observations précédentes.

Dans ce but, l'invention a pour objet un dispositif de compensation pour système de transmission optique comportant un terminal émetteur émettant un signal optique polarisé, une fibre optique de transmission, éventuellement des amplificateurs optiques et un terminal récepteur, ce dispositif comportant des premiers moyens de compensation de la dispersion de polarisation comprenant :

- au moins un contrôleur de polarisation,

- des moyens pour engendrer un retard différentiel entre deux modes de polarisation orthogonaux, ce contrôleur et ces moyens étant intercalés entre la fibre de transmission et le terminal récepteur dans cet ordre,

- et des moyens d'asservissement pour commander le contrôleur de polarisation,

caractérisé en ce qu'il comporte en outre des seconds moyens de compensation intercalés entre lesdits terminaux émetteur et récepteur, lesdits seconds moyens étant aptes à appliquer une compensation ajustable de dispersion chromatique, et en ce que lesdits moyens d'asservissement sont prévus pour commander à la fois le contrôleur de polarisation et lesdits seconds moyens de compensation en fonction d'un paramètre de mesure représentatif de la qualité du signal optique reçu par le terminal récepteur et de façon à optimiser ladite qualité.

Ainsi, le fait d'asservir dynamiquement la compensation de dispersion chromatique, de la même façon que le contrôleur de polarisation, assure en fait non seulement une compensation de la dispersion chromatique au sens usuel et qui est pratiquement fixe, mais aussi une compensation de la dispersion chromatique aléatoire qui est induite par la PMD.

Idéalement, la compensation doit viser à obtenir une amélioration maximale de la qualité du signal, ce qui se traduirait par le fait que la direction des états principaux de polarisation **e** de l'ensemble de liaison compris entre le signal émis et le signal reçu coïncide en permanence avec la direction du vecteur de polarisation **S** du signal reçu. En d'autres termes, l'angle $\Phi$ défini précédemment devrait être maintenu aussi petit que possible

En pratique cependant, l'efficacité de la compensation est limitée par les possibilités actuelles des dispositifs de mesure, de traitement de signal et d'actionnement (contrôleur de polarisation, compensateur ajustable de dispersion chromatique). Une autre limitation est le coût d'un tel dispositif.

L'invention a également pour but de proposer une approche pour résoudre cette question de dimensionnement des moyens de compensation en fonction du contexte du système de transmission mais aussi des performances recherchées.

Selon cet autre aspect de l'invention, lesdits moyens d'asservissement desdits premiers et seconds moyens de compensation sont dimensionnés en temps de réponse et en précision pour que l'angle entre la direction des états principaux de polarisation de l'ensemble de liaison compris entre le signal émis et le signal reçu, et la direction du vecteur de polarisation du signal reçu reste à tout instant inférieure à une valeur donnée permettant une amélioration de ladite qualité par rapport à un système de transmission démuni de compensation.

Les expérimentations permettent d'évaluer cette valeur maximale d'angle.

Ainsi, selon un aspect particulier de l'invention, les moyens d'asservissement sont dimensionnés pour que cet angle reste inférieur à 10 degrés et de préférence inférieur à 3 degrés.

Selon d'autres aspects de réalisation de l'invention, le paramètre de mesure est le degré de polarisation du signal optique reçu ou bien la largeur spectrale de la modulation du signal électrique obtenu par détection du signal optique reçu, les moyens d'asservissement étant prévus pour maximiser ce paramètre.

Selon une variante qui permet d'améliorer l'efficacité de la compensation, le paramètre de mesure est le produit pondéré du degré de polarisation du signal reçu par la largeur spectrale de la modulation du signal électrique obtenu par détection du signal reçu, les moyens d'asservissement étant prévus pour maximiser ce produit.

L'invention a aussi pour objet un système de transmission optique incorporant le dispositif de compensation défini ci-dessus. Le système peut être monocanal, c'est-à-dire prévu pour véhiculer un signal porté par une seule longueur d'onde ou à multiplexage en longueur d'onde ("WDM"), c'est-à-dire pour véhiculer un signal composé de plusieurs canaux portés par des longueurs d'onde différentes. Dans ce dernier cas, il convient d'appliquer pour chacun des canaux une compensation spécifique. Pour cela, le dispositif selon l'invention comporte des moyens pour extraire en réception au moins l'un des canaux et au moins un dispositif de compensation associé à ce canal.

D'autres aspects et avantages de l'invention apparaîtront dans la suite de la description en référence aux figures.

- La figure 1 représente l'espace de Poincaré déjà commenté précédemment.
- La figure 2 représente schématiquement un système de transmission optique comportant le dispositif de compensation selon l'invention.
- La figure 3 montre plus en détail les moyens d'asservissement du dispositif de compensation selon l'invention.

La figure 2 montre schématiquement et à titre d'exemple un système de transmission optique muni du dispositif de compensation selon l'invention.

L'exemple représenté est un système à multiplexage en longueur d'onde prévu pour véhiculer plusieurs canaux Se$\lambda$, Se$\lambda$', Se$\lambda$" portés respectivement par les longueurs d'onde $\lambda$, $\lambda$', $\lambda$". Chaque canal, par exemple Se$\lambda$, est issu d'un terminal émetteur TX émettant un signal optique ayant la forme d'une modulation d'amplitude (et/ou de fréquence optique) d'une onde porteuse polarisée. Les canaux sont combinés dans un multiplexeur 1 dont la sortie est couplée à une liaison optique de transmission. Cette liaison est typiquement constituée d'une fibre optique LF et peut comporter des amplificateurs optiques (non représentés) disposés en amont et/ou en aval de la fibre. La liaison peut aussi être composée de plusieurs sections de fibre entre lesquels sont placés des amplificateurs optiques.

L'extrémité de la liaison rejoint au moins un terminal récepteur, par exemple RX, par l'intermédiaire d'un démultiplexeur 2 ayant pour fonction d'extraire le canal Sr$\lambda$ destiné au récepteur RX.

Le système comporte des moyens de compensation de la dispersion de polarisation CM disposés entre le démultiplexeur 2 et le récepteur RX, et comprenant :

- au moins un contrôleur de polarisation PC,
- des moyens DDG pour engendrer un retard différentiel entre deux modes de polarisation orthogonaux,
- et des moyens d'asservissement CU du contrôleur de polarisation PC.

Un exemple de réalisation détaillée du compensateur CM et les explications correspondantes sont indiquées dans la demande de brevet européen EP-A-853 395 précitée. On rappelle que les moyens d'asservissement CU sont prévus pour maximiser le degré de polarisation du signal issu du dispositif à retard différentiel DDG, lequel est typiquement constitué d'une fibre à maintien de polarisation PMF. D'autres méthodes d'asservissement visant à minimiser le taux d'erreur peuvent être employées, comme par exemple un asservissement conçu pour minimiser la largeur spectrale de la modulation du signal électrique obtenu par détection du signal optique issu du dispositif à retard différentiel DDG. Avantageusement, on peut aussi utiliser comme paramètre de mesure le produit pondéré des deux paramètres précédents, c'est-à-dire un paramètre p de la forme DOP$^x$.$\Delta\omega^y$, où DOP est le degré de polarisation, $\Delta\omega$ la largeur spectrale, x et y des coefficients de pondération optimisés pour le système de transmission concerné.

Conformément à l'invention, le dispositif de compensation est complété par moyens de compensation ajustable de dispersion chromatique DCM. Ces moyens sont par exemple constitués d'une première fibre dispersive DCF0 placée en amont du démultiplexeur 2 et en série avec la fibre de transmission (LF) et d'un élément dispersif réglable DCF1 placée entre le démultiplexeur 2 et le récepteur RX. Cette disposition permet d'appliquer pour l'ensemble des canaux une compensation commune grâce à DCF0 et une compensation dynamique spécifique pour chacun des canaux grâce à DCF1. Cet élément dispersive réglable est par exemple constitué d'une fibre munie d'un réseau de Bragg "chirpé" et pouvant subir une tension ajustable au moyen d'un actionneur piézo-électrique.

Le cas d'un système monocanal se distingue du cas précédent par l'absence du multiplexeur 1 et du démultiplexeur 2.

Si on ne tient pas compte d'autres phénomènes tels que les effets non linéaires, on peut noter que l'emplacement de la ou des fibre(s) dispersive(s) qui constituent les moyens de compensation de dispersion chromatique DCM n'est pas déterminant car seule la valeur de dispersion chromatique résiduelle de la liaison dans son ensemble est importante. Toutefois, pour des raisons pratiques, il peut être préférable de placer la ou les fibre(s) dispersive(s) à proximité du récepteur.

Une approche classique pour déterminer la compensation de dispersion chromatique à appliquer aurait consisté à choisir une valeur fixe. Or cette méthode n'est généralement plus acceptable si l'on tient compte de la PMD. Il convient par contre que la compensation de dispersion chromatique prenne des valeurs ajustées dynamiquement en réponse au comportement aléatoire de la PMD.

La figure 3 montre plus en détail les moyens d'asservissement CU du dispositif de compensation selon l'invention.

Ceux-ci comportent une interface optoélectronique OE dont l'entrée reçoit une partie du signal Srλ issue du dispositif à retard différentiel DDG. Cette interface a sa sortie reliée à un calculateur PU par l'intermédiaire d'un convertisseur analogique-numérique CAN. Les sorties du calculateur PU commandent le contrôleur de polarisation PC et l'élément dispersif DCF1 par l'intermédiaire d'un convertisseur numérique-analogique CNA.

L'interface OE a pour fonction d'élaborer le paramètre de mesure p représentatif de la qualité du signal Srλ, comme par exemple le degré de polarisation du signal Srλ. Le calculateur PU est programmé pour exécuter un algorithme d'optimisation visant à déterminer les commandes à appliquer au contrôleur de polarisation PC et à l'élément dispersif DCF1 pour que le paramètre p soit maintenu à un extremum correspondant la qualité maximale du signal Srλ.

L'algorithme d'optimisation est de type multidimensionnel de façon à piloter à la fois l'élément dispersif et au moins deux grandeurs d'ajustement du contrôleur de polarisation. Il existe de nombreux algorithmes de ce type et on pourra par exemple utiliser un algorithme conçu pour mettre en oeuvre la méthode dite de Powell, telle que décrite aux pages 412 à 420 du manuel intitulé "Numerical Recipes in C" par William H. Press et al, Cambridge University Press, 1994.

Les performances l'ensemble de la boucle de régulation doivent être adaptées au problème de la PMD. En particulier son temps de réponse doit être compatible avec la rapidité des fluctuations de PMD observées en pratique. De plus, elle doit présenter une précision suffisante pour obtenir une amélioration et cette précision dépend du niveau de l'amélioration recherché. Cette condition sur la précision peut s'exprimer en disant que l'angle Φ entre la direction **e** des états principaux de polarisation de l'ensemble de liaison compris entre le signal émis Seλ et le signal reçu Srλ, et la direction du vecteur de polarisation **S** du signal reçu Srλ

reste à tout instant inférieure à une valeur donnée permettant une amélioration de la qualité du signal par rapport à un système de transmission démuni de compensation.

Expérimentalement, on a trouvé que cet angle devait en général rester inférieur à 10 degrés et de préférence inférieur à 3 degrés.

Sachant que le vecteur de polarisation **S** peut effectuer jusqu'à 50 rotations par seconde, on peut en déduire le temps de réponse minimal à imposer à la boucle de régulation, selon la qualité de signal souhaité. En pratique, il convient par exemple d'avoir un temps de réponse inférieur à une milliseconde.

## Revendications

1. Dispositif de compensation pour système de transmission optique comportant un terminal émetteur (TX) émettant un signal optique polarisé (Seλ), une fibre optique de transmission (LF), éventuellement des amplificateurs optiques et un terminal récepteur (RX), ce dispositif comportant des premiers moyens de compensation de la dispersion de polarisation comprenant :

   - au moins un contrôleur de polarisation (PC),
   - des moyens (DDG) pour engendrer un retard différentiel entre deux modes de polarisation orthogonaux, ce contrôleur et ces moyens étant intercalés entre la fibre de transmission et le terminal récepteur dans cet ordre,
   - et des moyens d'asservissement (CU) pour commander le contrôleur de polarisation (PC),

   caractérisé en ce qu'il comporte en outre des seconds moyens de compensation (DCM) intercalés entre lesdits terminaux émetteur et récepteur (TX, RX), lesdits seconds moyens (DCM) étant aptes à appliquer une compensation ajustable de dispersion chromatique (DCx), et en ce que lesdits moyens d'asservissement (CU) sont prévus pour commander à la fois le contrôleur de polarisation (PC) et lesdits seconds moyens de compensation (DCM) en fonction d'un paramètre de mesure (p) représentatif de la qualité du signal optique reçu (Srλ) par le terminal récepteur (RX) et de façon à optimiser ladite qualité.

2. Dispositif de compensation selon la revendication 1, caractérisé en ce que lesdits moyens d'asservissement (CU) desdits premiers et seconds moyens de compensation sont dimensionnés en temps de réponse et en précision pour que l'angle (Φ) entre la direction (**e**) des états principaux de polarisation de l'ensemble de liaison compris entre le signal émis (Seλ) et le signal reçu (Srλ), et la direction du vecteur de polarisation (**S**) du signal reçu (Srλ) reste à tout instant inférieur à une valeur donnée permettant une amélioration de ladite qualité par rapport à un système de transmission démuni de compensation.

**3.** Dispositif de compensation selon la revendication 2, caractérisé en ce que lesdits moyens d'asservissement (CU) sont dimensionnés pour que ledit angle reste inférieur à 10 degrés.

**4.** Dispositif de compensation selon la revendication 3, caractérisé en ce que lesdits moyens d'asservissement (CU) sont dimensionnés pour que ledit angle reste inférieur à 3 degrés.

**5.** Dispositif de compensation selon l'une des revendications 1 à 4, caractérisé en ce que ledit paramètre de mesure (p) est le degré de polarisation dudit signal reçu (Sr$\lambda$), lesdits moyens d'asservissement (CU) étant prévus pour le maximiser.

**6.** Dispositif de compensation selon l'une des revendications 1 à 4, caractérisé en ce que ledit paramètre de mesure (p) est la largeur spectrale de la modulation du signal électrique obtenu par détection du signal reçu (Sr$\lambda$), lesdits moyens d'asservissement (CU) étant prévus pour la maximiser.

**7.** Dispositif de compensation selon l'une des revendications 1 à 4, caractérisé en ce que ledit paramètre de mesure (p) est le produit pondéré du degré de polarisation dudit signal reçu (Sr$\lambda$) par la largeur spectrale de la modulation du signal électrique obtenu par détection du signal reçu (Sr$\lambda$), lesdits moyens d'asservissement (CU) étant prévus pour maximiser ce produit.

**8.** Système de transmission optique, caractérisé en ce qu'il comporte un dispositif de compensation selon l'une des revendications 1 ou 7.

**9.** Système de transmission optique pour signal à plusieurs canaux multiplexés en longueurs d'onde (Se$\lambda$, Se$\lambda$', Se$\lambda$"), caractérisé en ce qu'il comporte des moyens (2) pour extraire en réception au moins l'un desdits canaux (Sr$\lambda$) et au moins un dispositif de compensation (CM, DCF0) associé audit canal extrait et conforme à l'une des revendications 1 ou 8.

**10.** Système de transmission optique selon la revendication 9, caractérisé en ce que lesdits moyens de compensation de dispersion chromatique (DCM, DCF0) comportent une première fibre dispersive fixe (DCF0) placée en amont desdits moyens d'extraction (2) et en série avec ladite fibre optique de transmission (LF), et un élément dispersif ajustable (DCF1) placée entre lesdits moyens d'extraction (2) et ledit terminal récepteur (RX).

## FIG_1

## FIG_2

## FIG_3

**Office européen des brevets**

**RAPPORT DE RECHERCHE EUROPEENNE**

Numéro de la demande

EP 00 40 1698

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 716 516 A (AT & T CORP) 12 juin 1996 (1996-06-12) * abrégé * * colonne 1, ligne 14 - colonne 3, ligne 35 * * revendications 1,19 * | 1-10 | H04B10/135 H04B10/18 |
| A | EP 0 700 178 A (FUJITSU LTD) 6 mars 1996 (1996-03-06) * abrégé; figure 19 * | 1-10 | |

**DOMAINES TECHNIQUES RECHERCHES (Int.Cl.7)**

H04B

Le présent rapport a été établi pour toutes les revendications

| Lieu de la recherche | Date d'achèvement de la recherche | Examinateur |
|---|---|---|
| LA HAYE | 6 octobre 2000 | Lazaridis, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

**ANNEXE AU RAPPORT DE RECHERCHE EUROPEENNE
RELATIF A LA DEMANDE DE BREVET EUROPEEN NO.**   EP 00 40 1698

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

06-10-2000

| Document brevet cité au rapport de recherche | | Date de publication | Membre(s) de la famille de brevet(s) | | Date de publication |
|---|---|---|---|---|---|
| EP 0716516 | A | 12-06-1996 | US | 5659412 A | 19-08-1997 |
| | | | JP | 8262513 A | 11-10-1996 |
| EP 0700178 | A | 06-03-1996 | JP | 8321805 A | 03-12-1996 |
| | | | US | 5991477 A | 23-11-1999 |
| | | | US | 5870213 A | 09-02-1999 |
| | | | US | 5717510 A | 10-02-1998 |
| | | | US | 5909297 A | 01-06-1999 |
| | | | US | 5815294 A | 29-09-1998 |
| | | | US | 5754322 A | 19-05-1998 |
| | | | US | 5896217 A | 20-04-1999 |
| | | | US | 5760937 A | 02-06-1998 |

EPO FORM P0460